# FASCICULE DE BREVET EUROPEEN

(11) **EP 0 811 346 B1**
(45) Date de publication et mention de la délivrance du brevet: **13.11.2002**
(21) Numéro de dépôt: 97401253.6
(22) Date de dépôt: 04.06.1997
(51) Int. Cl.: A47J 37/06

(54) **Appareil de cuisson de table à utilisations multiples**
Mehrzwecktischkochgerät
Table cooking apparatus for multiple uses

(30) Priorité: 06.06.1996 FR 9606996
(43) Date de publication de la demande: 10.12.1997
(73) Titulaire: SEB S.A., 69130 Ecully (FR)
(72) Inventeur: Gouthiere, Christophe, 74150 Rumilly (FR); Epinat, Alain, 74000 Annecy (FR); Guerrier, Didier, 74150 Bloye (FR); Houin, Guy, 74150 Rumilly (FR)
(74) Mandataire: Rémont, Claude

(56) Documents cités:
- EP-A- 0 054 160
- EP-A- 0 522 960
- WO-A-92/10126
- CH-A- 544 537

## Description

La présente invention concerne un appareil de cuisson de table à utilisations multiples, notamment pour des repas à base de fromages, tels que raclette, fondue au fromage, tartiflette, et diverses fondues.

On connaît en effet des appareils de cuisson de table, tels que décrits dans la demande de brevet FR 95 11 166 au nom de la demanderesse, comportant une base et une résistance électrique chauffante s'étendant au-dessus de cette base. Ce type d'appareils permet notamment la réalisation de raclettes au moyen de coupelles à fromage placées sur la base, sous la résistance. Parfois, une surface de gril est prévue sur un couvercle coiffant la résistance.

Dans ce type d'appareil, la résistance est en contact avec la surface de gril de sorte que celle-ci est portée à une température élevée, de l'ordre de 250°C.

Un tel appareil n'a qu'une seule fonction de cuisson, c'est-à-dire qu'il permet de griller les aliments placés sur la surface de gril ou sous la résistance.

Il n'est donc pas adapté à des cuissons plus douces, dans des conditions permettant par exemple la réalisation de fondues au fromage ou la garde au chaud des aliments.

On connaît également des appareils de cuisson pour la préparation de fondues au fromage. Ces derniers sont cependant limités par leur utilisation spécifique.

On connaît également des appareils de cuisson, tels que décrits dans la demande de brevet EP A 0 054 160 et la demande de brevet CH 544 537, ayant un étage inférieur et un étage supérieur de cuisson. Cependant, dans ces appareils, l'étage supérieur de cuisson comporte soit un plateau adapté à faire des crêpes, soit un récipient creux, l'un comme l'autre étant directement en contact avec la résistance électrique afin d'obtenir une température suffisamment élevée pour assurer la cuisson correcte des aliments dans cet étage supérieur.

Ces appareils ne sont donc pas adaptés à des cuissons plus douces et requièrent l'utilisation d'un thermostat qui coupe périodiquement l'alimentation électrique de la résistance, au détriment de la cuisson des aliments disposés sur le plateau inférieur de l'appareil de cuisson.

La présente invention a pour but de proposer un appareil de cuisson de table qui permette de réaliser plusieurs types de cuisson.

L'appareil de cuisson visé par l'invention comporte une base et une résistance électrique chauffante s'étendant au-dessus de la base.

Selon l'invention cet appareil est caractérisé en ce qu'il comprend un récipient disposé au-dessus de la base, la résistance étant adaptée à chauffer par rayonnement le récipient et des aliments disposés sur la base.

L'appareil de cuisson conforme à l'invention permet à la fois de griller des aliments disposés sur la base, directement en regard de la résistance et de cuire ou maintenir au chaud des aliments dans le récipient. Le chauffage par rayonnement du récipient évite de surchauffer celui-ci et permet une meilleure répartition de la chaleur.

Cet appareil de cuisson de table possède ainsi une double fonction de cuisson, permettant ainsi simultanément ou successivement de griller, cuire, réchauffer ou maintenir au chaud des aliments.

Le récipient est disposé à distance de la résistance, de sorte que la température de ce dernier ne soit pas trop élevée.

Selon une version avantageuse de l'invention, le récipient est disposé au-dessus de la résistance, le fond du récipient ayant une surface réfléchissante en regard de la résistance.

Le rayonnement de cette dernière est alors réfléchi vers la base de l'appareil sur laquelle sont placés les aliments à griller améliorant ainsi la fonction gril de l'appareil et évitant la surchauffe du récipient.

Selon une version préférée de l'invention, l'appareil comprend un thermostat comportant un capteur thermique en contact avec le récipient et adapté à couper l'alimentation électrique de la résistance chauffante à une température de consigne supérieure à 100°C.

Ainsi, grâce à la présence du thermostat, il est possible de réaliser des fondues à base d'huile, du type fondues bourguignonnes, tout en respectant les normes de sécurité et en évitant la surchauffe de l'huile. En outre, la température de consigne étant supérieure à 100°C, le thermostat est "aveugle" lorsque le récipient contient des préparations à base d'eau, de fromage, etc..., c'est-à-dire qu'il ne coupe pas l'alimentation électrique de la résistance.

Cette dernière peut ainsi assurer pleinement sa fonction grill vis-à-vis des aliments disposés sur la base tout en chauffant le récipient supérieur.

Selon une version avantageuse de l'invention, des moyens formant une cavité de confinement s'étendent autour de la résistance et du récipient, la cavité débouchant sensiblement en regard de la base.

Ces moyens formant une cavité permettent de confiner la chaleur dégagée par la résistance et de chauffer ainsi le récipient. En effet, par un phénomène de convection naturelle, l'air chauffé par la résistance entre dans la cavité par son ouverture débouchant en partie inférieure, face à la base et s'accumule dans la cavité de confinement. Le récipient est ainsi maintenu à une température sensiblement constante grâce aux échanges thermiques avec la cavité de confinement qui l'entoure.

D'autres particularités et avantages de l'invention apparaîtront encore dans la description ci-dessous.

Aux dessins annexés, donnés à titre d'exemples non limitatifs :
- la figure 1 est une vue en coupe d'un appareil de cuisson conforme à un premier mode de réalisation de l'invention ;
- la figure 2 est une vue en coupe d'un appareil de cuisson conforme à un second mode de réalisation ;
- la figure 3 est une vue en coupe d'un appareil de cuisson conforme à un troisième mode de réalisation ;
- la figure 4 est une vue en coupe d'un appareil de cuisson conforme à un quatrième mode de réalisation;
- la figure 5 est une vue en coupe d'un appareil de cuisson conforme à un cinquième mode de réalisation;
- la figure 6 est une vue en coupe schématisant la température de divers aliments contenus dans le récipient en fonction du temps; et
- la figure 7 est une vue en coupe schématique illustrant un thermostat adapté à un appareil de cuisson conforme à l'invention.

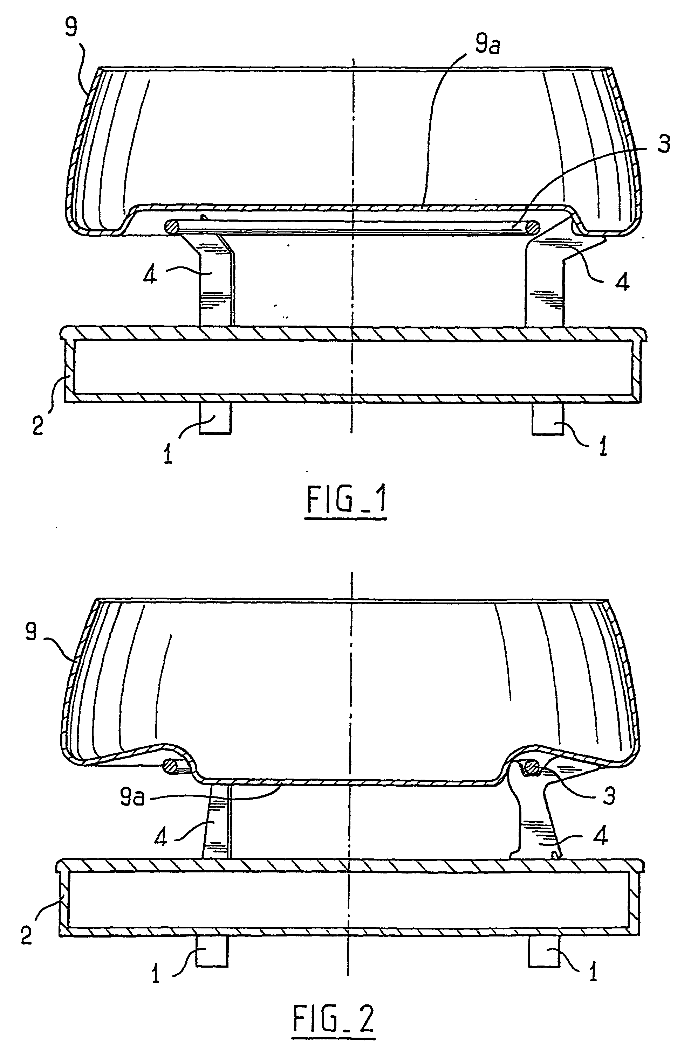

En référence tout d'abord aux modes de réalisation décrits aux figures 1 et 2, l'appareil de cuisson de table comporte une base 1, 2 et une résistance électrique chauffante 3 s'étendant au-dessus de la base 1, 2.

Cet appareil est conçu pour être placé au centre d'une table, de sorte que chaque convive puisse surveiller sa propre cuisson des aliments.

La base comprend généralement un socle 1, constitué par exemple de quatre pieds 1, et une sole 2 reposant sur le socle et formant ainsi une surface plane sous la résistance chauffante 3.

Conformément à l'invention, un récipient 9 est disposé au-dessus de la base 1, 2, la résistance chauffant par rayonnement à la fois le récipient et des aliments disposés sur la base.

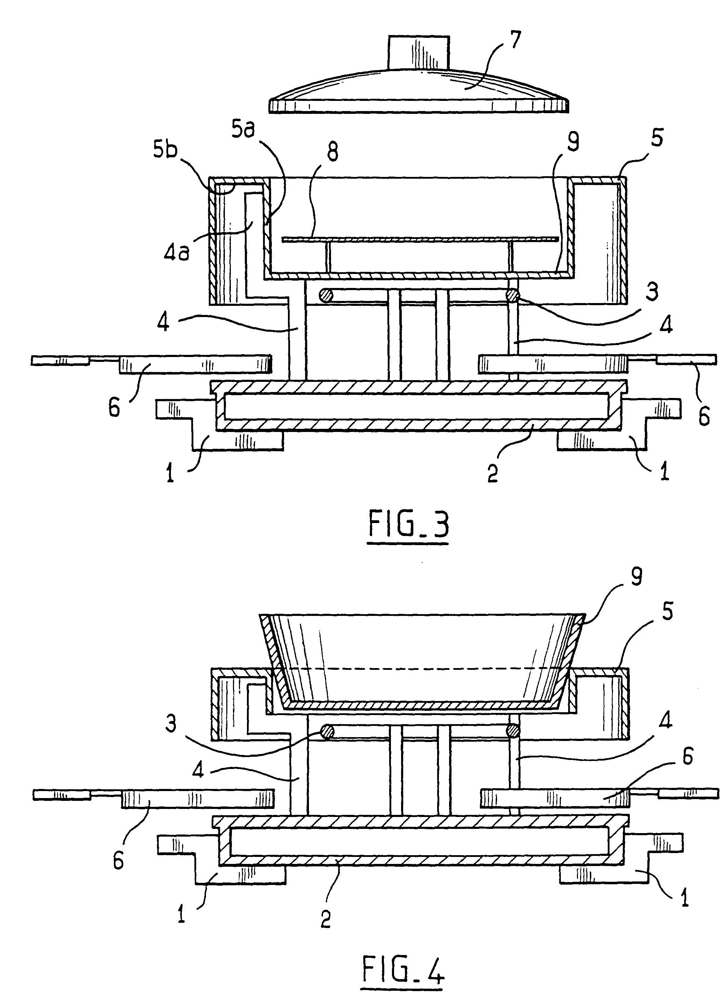

On peut ainsi à la fois cuire ou garder au chaud des aliments dans le récipient et griller d'autres aliments placés par exemple dans des coupelles 6 posées sur la sole 2 comme illustré à la figure 3.

De préférence, le fond du récipient 9 a une face inférieure, en regard de la résistance, réfléchissante.

Cette surface inférieure peut par exemple être en aluminium.

Le fond du récipient est disposé à distance de la résistance, afin de ne pas gêner le rayonnement de celle-ci.

Dans l'exemple de la figure 1, le fond du récipient 9 a une portion centrale 9a concave formant un logement pour protéger la résistance 3, le récipient 9 reposant par son bord périphérique sur des moyens formant support 4.

Dans l'exemple de la figure 2, la portion centrale 9a du fond du récipient 9 est au contraire en saillie vers la base de l'appareil, la résistance 3 étant disposée autour de cette portion centrale 9a.

Le fond du récipient 9 est à une distance comprise entre 2 et 20 mm de la résistance 3, et de préférence comprise entre 5 et 10 mm.

On peut ainsi maintenir le contenu du récipient 9 à une température proche de 100°C.

La distance séparant la sole 2 de la résistance 3 est assez grande pour permettre l'introduction des coupelles 6. Elle peut être de l'ordre de 50 mm.

La surface réfléchissante du fond du récipient 9 permet de compenser cette distance élevée en orientant le rayonnement vers la base 1, 2 de l'appareil.

Les figures 3 et 4 décrivent d'autres modes de réalisation, dont les éléments communs avec les réalisations précédentes et portant les mêmes références numériques ne seront pas redécrits ci-dessous.

L'appareil de cuisson illustré aux figures 3 et 4 comporte des moyens formant une cavité de confinement 5 s'étendant autour de la résistance 3 et du récipient 9.

Cette cavité 5 débouche sensiblement en regard de la base 1, 2.

Dans l'exemple de la figure 3, le récipient 9 et les moyens formant cavité 5 sont solidaires et forment ainsi une pièce monobloc.

Les moyens formant cavité 5 comportent une paroi interne 5a formant la paroi latérale du récipient 9, ou en d'autres termes, le récipient 9 comprend une double paroi latérale, une cavité de confinement 5 étant ainsi créée entre ces deux parois.

De préférence, les moyens formant cavité 5 ont une section transversale sensiblement en forme de « U » renversée, de sorte que la cavité débouche en regard de la sole 2.

Lorsque le récipient 9 est circulaire, la cavité 5 a une forme d'anneau entourant le récipient.

Dans l'exemple de réalisation décrit à la figure 4, le récipient 9 et les moyens formant cavité 5 ne sont pas solidaires les uns des autres.

Les moyens formant cavité 5 peuvent être constitués d'une pièce annulaire, de section transversale également en forme de « U » renversé et le récipient 9 repose par ses parois latérales sur la pièce annulaire.

Dans toutes ces réalisations, les moyens formant cavité 5 et le récipient 9 sont amovibles, afin de faciliter leur nettoyage.

Des moyens formant support 4 sont adaptés à supporter le récipient 9 et les moyens formant cavité 5 au-dessus de la base 1, 2, les moyens formant support 4 comportant une branche 4a s'étendant à l'intérieur de la cavité 5.

Cette branche 4a s'étend sensiblement jusqu'au fond 5b de la cavité 5 afin d'améliorer la stabilité du récipient 9 au-dessus de la base 1, 2.

L'appareil de cuisson selon l'invention peut ainsi être utilisé en toute sécurité sur une table entourée de convives.

Un tel appareil de cuisson conforme à l'invention permet par exemple différents types d'utilisation.

Lors de la réalisation d'une raclette, le fromage est placé dans les coupelles 6 pour fondre sous la résistance 3.

En versant de l'eau dans le fond du récipient 9 et en plaçant des pommes de terre sur une grille 8 au-dessus du niveau d'eau, on peut maintenir au chaud des pommes de terre grâce à la vapeur d'eau.

Pour la réalisation d'une fondue savoyarde, le vin et le fromage peuvent être placés dans le récipient 9. Un couvercle 7 peut également être utilisé afin d'accélérer la montée en température du vin lors de la préparation.

L'appareil de cuisson peut également permettre la réalisation de recettes diverses telles que la tartiflette. La préparation à base de pommes de terre et de lardons peut être soit cuite dans le récipient 9 en utilisant le couvercle 7, soit simplement maintenue au chaud dans le récipient 9. Chaque convive peut ensuite prendre une petite quantité de la préparation et la placer dans une coupelle avec du fromage pour faire gratiner l'ensemble sous la résistance 3.

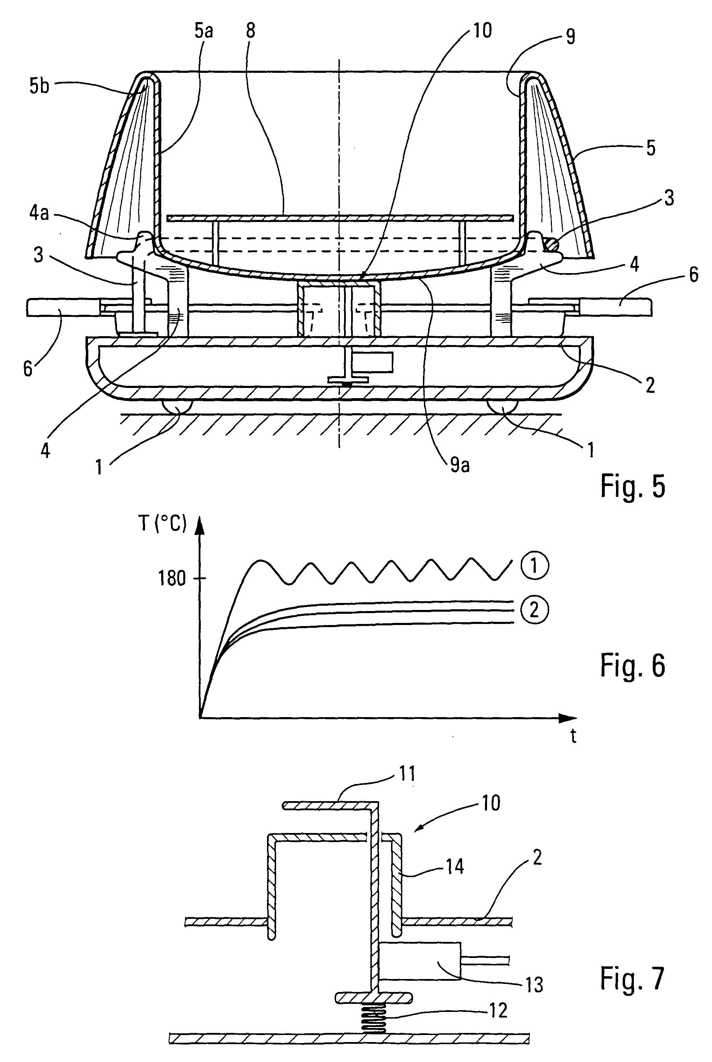

L'appareil de cuisson illustré à la figure 5 comprend en outre un thermostat 10 comportant un capteur thermique en contact avec le récipient 9 et adapté à couper l'alimentation électrique de la résistance chauffante 3 à une température de consigne, cette température étant supérieure à 100°C.

De préférence, cette température de consigne est sensiblement égale à 180°C, autorisant un chauffage correct lorsque le récipient contient de l'huile en évitant de brûler celle-ci.

Comme illustré à la figure 6, la température de l'huile (courbe 1) est maintenue, au cours du temps, proche de 180°C, le thermostat 10 coupant périodiquement l'alimentation électrique de la résistance 3 afin d'assurer la régulation thermique de l'huile.

En outre, la résistance 3 chauffant par rayonnement le récipient 9 contenant l'huile, le premier pic de surchauffe est évité ce qui permet de s'affranchir d'un fusible thermique.

Par ailleurs, le thermostat étant calibré à une température de consigne supérieure à 100°C, il ne coupe pas l'alimentation électrique de la résistance électrique 3 lorsque le récipient contient de l'eau ou une préparation à base de fromage, de chocolat, de bouillon... La température de ces aliments reste alors sensiblement constante (voir courbes 2) pendant toute la durée d'utilisation de l'appareil et la résistance électrique 3 fonctionne de manière continue afin de griller correctement les aliments disposés sur la sole 2 de l'appareil, dans des coupelles 6 par exemple.

Ainsi, il est possible de réaliser une fondue au fromage avec une chauffe continue et régulière du récipient 9, ou bien une raclette, en disposant du fromage dans les coupelles 6 et en gardant au chaud des pommes de terre disposées sur la grille 8, de l'eau étant versée dans le fond du récipient.

De même, pour réaliser une tartiflette, des pommes de terre sautées sont disposées dans le récipient 9 et gardées au chaud sans que le thermostat 10 ne coupe l'alimentation électrique de la résistance 3. Cette dernière peut ainsi assurer une chauffe continue pour faire fondre correctement le fromage dans les coupelles 6.

Comme illustré à la figure 7, le thermostat 10 comprend un capteur thermique 11 formant palpeur et adapté à venir en contact thermique avec le fond 9a du récipient sous l'action d'une force de rappel élastique. Ainsi, de manière connue, un ressort 12 permet de maintenir en saillie le capteur 11 lorsque le récipient 9 est ôté de l'appareil.

Bien entendu, la lame métallique du capteur 11, montée sur un ressort 12, pourrait être remplacée par une lame métallique suffisamment élastique pour se déformer lors du contact avec le récipient 9 et retrouver sa forme initiale lorsque ce dernier est retiré.

Le capteur 11 est logé dans un boîtier 14 fixé à la sole 2 de l'appareil, les moyens électroniques de régulation 13 étant logés dans la base de l'appareil.

Le boîtier 14 peut également être mobile sur la sole 2 de l'appareil, sa partie supérieure formant capteur thermique. Le boîtier 14 vient alors en contact avec le fond du récipient sous l'action d'une force de rappel élastique. La lame métallique 11 est alors supprimée.

Dans cet exemple, le capteur thermique 11 vient en contact sensiblement au centre du fond 9a du récipient 9.

A titre de variante, le thermostat et le capteur thermique 11 pourraient être logés dans les moyens de support 4 du récipient 9, au niveau d'un point d'appui du récipient 9 sur les moyens de support 4.

L'appareil de cuisson peut comporter deux, trois ou quatre bras 4 formant support répartis régulièrement sur la périphérie de la base 1, 2 de l'appareil.

Ces bras comportent un épaulement pour supporter le récipient 9.

Les moyens formant support 4 sont en outre adaptés à supporter la résistance électrique 3 au-dessous de la base 1, 2.

Ainsi, à la figure 5, la résistance 3 forme une spire circulaire, supportée par les bras 4 de support, de façon à s'étendre autour du fond du récipient 9.

Les bras 4 de support comportent en outre une branche 4a s'étendant à l'intérieur de la cavité de confinement 5 afin d'améliorer la stabilité du récipient 9 au-dessus de la base 1, 2.

La résistance électrique 3 est disposée au-droit des moyens formant cavité de confinement 5, dans leur extrémité débouchant en regard de la sole 2 de l'appareil, de sorte que l'air emprisonné dans la cavité 5 est correctement chauffé pour assurer un chauffage du récipient par sa paroi 5a en contact avec la cavité de confinement 5.

L'appareil de cuisson conforme à l'invention est d'un emploi très flexible et permet de réaliser différents modes de cuisson, tels que griller, réchauffer, cuire, recettes qui nécessitaient jusqu'à présent l'utilisation d'appareils de cuisson différents.

Bien entendu, de nombreuses modifications peuvent être apportées aux exemples décrits ci-dessus sans sortir du cadre de l'invention.

Notamment, les caractéristiques structurelles des divers modes de réalisation peuvent être combinées pour obtenir des modes de réalisation différents.

## Revendications

1. Appareil de cuisson de table comportant une base (1, 2) et une résistance électrique chauffante (3) s'étendant au-dessus de la base (1, 2), **caractérisé en ce qu'**il comprend :
- un récipient (9) disposé au-dessus de la base (1, 2), à distance de la résistance (3), ladite résistance (3) étant adaptée à chauffer par rayonnement le récipient (9) et des aliments disposés sur la base (1, 2), et
- un thermostat (10) comportant un capteur thermique (11) en contact avec le récipient (9) et adapté à couper l'alimentation électrique de la résistance (3) à une température de consigne supérieure à 100°C.

2. Appareil de cuisson conforme à la revendication 1, **caractérisé en ce que** le récipient (9) est à une distance comprise entre 2 et 20 mm de la résistance (3).

3. Appareil de cuisson conforme à l'une des revendications 1 ou 2, **caractérisé en ce que** le récipient est disposé au-dessus de la résistance (3), le fond du récipient (9) ayant une face réfléchissante en regard de la résistance (3).

4. Appareil de cuisson conforme à l'une des revendications 1 à 3, **caractérisé en ce que** la température de consigne est sensiblement égale à 180°C.

5. Appareil de cuisson conforme à l'une des revendications 1 à 4, **caractérisé en ce qu'**il comprend en outre des moyens formant une cavité de confinement (5) s'étendant autour de la résistance (3) et du récipient (9), ladite cavité (5) débouchant sensiblement en regard de la base (1, 2).

6. Appareil de cuisson conforme à la revendication 5, **caractérisé en ce que** les moyens formant cavité (5) ont une section transversale sensiblement en forme de "U" débouchant en regard de la base (1, 2).

7. Appareil de cuisson conforme à l'une des revendications 5 ou 6, **caractérisé en ce que** le récipient (9) et les moyens formant cavité (5) sont solidaires.

8. Appareil de cuisson conforme à l'une des revendications 5 à 7, **caractérisé en ce que** les moyens formant cavité (5) comportent une paroi interne (5a) formant la paroi latérale du récipient (9).

9. Appareil de cuisson conforme à l'une des revendications 5 à 8, **caractérisé en ce que** le récipient (9) et les moyens formant cavité (5) sont amovibles.

10. Appareil de cuisson conforme à l'une des revendications 5 à 9, **caractérisé en ce qu'**il comprend des moyens formant support (4) adaptés à supporter le récipient (9) et les moyens formant cavité (5) au-dessus de la base (1, 2), les moyens formant support (4) comportant une branche (4a) s'étendant à l'intérieur de la cavité (5).

11. Appareil de cuisson conforme à la revendication 10, **caractérisé en ce que** ladite branche (4a) s'étend sensiblement jusqu'au fond (5b) de la cavité (5).

12. Appareil de cuisson conforme à l'une des revendications 10 ou 11, **caractérisé en ce que** les moyens formant support (4) sont adaptés à supporter la résistance électrique (3) au-dessus de la base (1, 2).

13. Appareil de cuisson conforme à l'une des revendications 5 à 12, **caractérisé en ce que** la résistance électrique (3) est disposée au-droit des moyens formant cavité de confinement (5).

## Claims

1. Table cooking appliance having a base (1, 2) and a heating electrical resistor (3) extending above the base (1, 2), **characterised in that** it comprises:
- a container (9) disposed above the base (1, 2) at a distance from the resistor (3), said resistor (3) being adapted to heat by radiation the container (9) and food disposed on the base (1, 2), and
- a thermostat (10) having a heat sensor (11) in contact with the container (9) and adapted to cut off the electrical supply of the resistor (3) at a set point temperature higher than 100°C.

2. Cooking appliance according to Claim 1, **characterised in that** the container (9) is at a distance between 2 mm and 20 mm from the resistor (3).

3. Cooking appliance according to either of Claims 1 or 2, **characterised in that** the container is disposed above the resistor (3), the bottom of the container (9) having a reflective face opposite the resistor (3).

4. Cooking appliance according to one of Claims 1 to 3, **characterised in that** the set point temperature is substantially equal to 180°C.

5. Cooking appliance according to one of Claims 1 to 4, **characterised in that** it also comprises means forming a containment cavity (5) extending around the resistor (3) and the container (9), said cavity (5) opening out substantially opposite the base (1, 2).

6. Cooking appliance according to Claim 5, **characterised in that** the means forming a cavity (5) have a cross section substantially in the shape of a "U" opening out opposite the base (1, 2).

7. Cooking appliance according to either of Claims 5 or 6, **characterised in that** the container (9) and the means forming a cavity (5) are immovably attached.

8. Cooking appliance according to one of Claims 5 to 7, **characterised in that** the means forming a cavity (5) have an internal wall (5a) forming the lateral wall of the container (9).

9. Cooking appliance according to one of Claims 5 to 8, **characterised in that** the container (9) and the means forming a cavity (5) are removable.

10. Cooking appliance according to one of Claims 5 to 9, **characterised in that** it comprises means forming a support (4) adapted to support the container (9) and the means forming a cavity (5) above the base (1, 2), the means forming a support (4) having an arm (4a) extending inside the cavity (5).

11. Cooking appliance according to Claim 10, **characterised in that** said arm (4a) extends substantially as far as the bottom (5b) of the cavity (5).

12. Cooking appliance according to either of Claims 10 or 11, **characterised in that** the means forming a support (4) are adapted to support the electrical resistor (3) above the base (1, 2).

13. Cooking appliance according to one of Claims 5 to 12, **characterised in that** the electrical resistor (3) is disposed at right angles to the means forming a containment cavity (5).

## Patentansprüche

1. Tischkochgerät mit einer Basis (1, 2) und einem oberhalb der Basis (1, 2) verlaufenden elektrischen Heizwiderstand (3), **dadurch gekennzeichnet, dass** es umfasst:
- einen oberhalb der Basis (1, 2) mit einem Abstand von dem Widerstand (3) angeordneten Behälter (9), wobei der Widerstand (3) geeignet ist, den Behälter (9) und auf der Basis (1, 2) angeordnete Nahrungsmittel durch Strahlung zu heizen, und
- einen Thermostaten (10) mit einem Wärmeaufnehmer (11), der in Kontakt mit dem Behälter (9) ist, und geeignet ist, die elektrische Versorgung des Widerstands (3) bei einer Solltemperatur oberhalb von 100°C zu unterbrechen.

2. Kochgerät nach Anspruch 1, **dadurch gekennzeichnet, dass** der Behälter (9) einen Abstand zwischen 2 und 20 mm von dem Widerstand (3) hat.

3. Kochgerät nach einem der Ansprüche 1 oder 2, **dadurch gekennzeichnet, dass** der Behälter oberhalb des Widerstands (3) angeordnet ist, wobei der Boden des Behälters (9) eine reflektierende Fläche gegenüber dem Widerstand (3) aufweist.

4. Kochgerät nach einem der Ansprüche 1 bis 3, **dadurch gekennzeichnet, dass** die Solltemperatur im wesentlichen gleich 180°C beträgt.

5. Kochgerät nach einem der Ansprüche 1 bis 4, **dadurch gekennzeichnet, dass** es außerdem einen Einschlusshohlraum (5) formende Mittel umfasst, die um den Widerstand (3) und den Behälter (9) verlaufen, wobei der Hohlraum (5) im wesentlichen gegenüber der Basis (1, 2) mündet.

6. Kochgerät nach Anspruch 5, **dadurch gekennzeichnet, dass** die einen Hohlraum (5) formenden Mittel einen Querschnitt im wesentlichen in Form eines "U" haben, welches gegenüber der Basis (1, 2) mündet.

7. Kochgerät nach einem der Ansprüche 5 oder 6, **dadurch gekennzeichnet, dass** der Behälter (9) und die einen Hohlraum (5) formenden Mittel miteinander fest verbunden sind.

8. Kochgerät nach einem der Ansprüche 5 bis 7, **dadurch gekennzeichnet, dass** die einen Hohlraum (5) formenden Mittel eine die Seitenwand des Behälters (9) formende Innenwand (5a) umfassen.

9. Kochgerät nach einem der Ansprüche 5 bis 8, **dadurch gekennzeichnet, dass** der Behälter (9) und die einen Hohlraum (5) formenden Mittel lösbar sind.

10. Kochgerät nach einem der Ansprüche 5 bis 9, **dadurch gekennzeichnet, dass** es einen Träger (4) formende Mittel umfasst, die geeignet sind, den Behälter (9) und die einen Hohlraum (5) formenden Mittel oberhalb der Basis (1, 2) zu stützen, wobei die einen Träger (4) formenden Mittel einen Ast (4a) umfassen, der sich in das Innere des Hohlraums (5) erstreckt.

11. Kochgerät nach Anspruch 10, **dadurch gekennzeichnet, dass** sich der Ast (4a) im wesentlichen bis zum Boden (5b) des Hohlraums (5) erstreckt.

12. Kochgerät nach einem der Ansprüche 10 oder 11, **dadurch gekennzeichnet, dass** die einen Träger (4) formenden Mittel geeignet sind, den elektrischen Widerstand (3) oberhalb der Basis (1, 2) zu stützen.

13. Kochgerät nach einem der Ansprüche 5 bis 12, **dadurch gekennzeichnet, dass** der elektrische Widerstand (3) zu den einen Einschlusshohlraum (5) formenden Mitteln geradlinig angeordnet ist.
